# EUROPÄISCHE PATENTSCHRIFT

(11) **EP 0 856 461 B1**
(45) Veröffentlichungstag und Bekanntmachung des Hinweises auf die Patenterteilung: **15.12.1999**
(21) Anmeldenummer: 98100332.0
(22) Anmeldetag: 10.01.1998
(51) Int. Cl.: B62M 9/10

(54) **Kettenschaltung, insbesondere für Fahrräder**
Chain shifting device for bicycle
Changement de vitesse à chaîne pour bicyclette

(30) Priorität: 04.02.1997 DE 19703930
(43) Veröffentlichungstag der Anmeldung: 05.08.1998
(73) Patentinhaber: SRAM Deutschland GmbH, 97424 Schweinfurt (DE)
(72) Erfinder: Schmidt, Frank, Dipl.-Ing., 97422 Schweinfurt (DE)

(56) Entgegenhaltungen:
- EP-A- 0 538 780
- DE-C- 4 445 035
- US-A- 5 458 543

## Beschreibung

Die Erfindung bezieht sich auf eine Kettenschaltung gemäß dem Oberbegriff des Patentanspruchs 1.

Aus der DE 44 45 035 C1 ist eine Kettenschaltung mit einem treibenden Kettenradsatz bekannt, dessen größeres Kettenrad an seiner dem kleineren Kettenrad zugewandten Seite Schalthilfen aufweist, die in Gestalt von Konusnieten einer Kette das Umlegen vom kleineren Kettenrad auf das größere Kettenrad erleichtern. Diese Konusnieten ragen aus der Kettenlaufebene heraus und fangen die Kette, sofern diese durch eine Umlegeeinrichtung in axialer Richtung gegen diese Steighilfen verschoben wird, auf, und erleichtern so das Umlegen der Kette auf das jeweils größere Kettenrad. Hingegen ist das Umlegen der Kette vom größeren auf das kleinere Kettenrad zwar einfacher, doch sind die Konusnieten zu keiner Zeit an einem gezielten Umlenken der Kette beteiligt, so daß das Umlegen der Kette auch an Übergangsbereichen stattfinden kann, die konstruktionsbedingt nicht dafür vorgesehen waren.

Der erfindungsgemäße Vorschlag bringt zusätzlich zum Umlegen der Kette auf das größere Kettenrad als Verbesserung die Möglichkeit der zielgenauen Umlegung vom großen Kettenrad auf das kleine Kettenrad, indem die Kette sich nach dem Verlassen der Verzahnung des größeren Kettenrades sich auf dem Konusniet, der vormals als Steighilfe verwendet wurde, abstützt und diesen als Kettenlenkeinrichtung für das Einlaufen der Kette in die Verzahnung des kleineren Kettenrades benutzt. Bei korrekter Winkeleinstellung der Kettenräder zueinander bei der Montage derselben am Tretlager kann die Kette mit ihren Zwischenräumen zwischen den Gelenken genau in die Zähne des kleineren Kettenrades eingreifen und unter Last einen ruckfreien Übergang bewirken.

Von Vorteil ist ferner eine möglichst hohe Anzahl von Kettenübergangsbereichen, die dadurch erreicht werden, daß alle am treibenden Kettenradsatz beteiligten Kettenräder einen gemeinsamen Teiler haben, der möglichst groß sein sollte. Es ergeben sich nämlich ebenso viele Kettenübergangsbereiche wie der gemeinsame Teiler groß ist. Hat z. B. ein Kettenradsatz drei Kettenräder mit den Zähnezahlen 50,40,30, so ist der gemeinsame Teiler 10, was ebenso der Anzahl der möglichen Kettenübergangsbereiche entspricht.

Es ist somit die Aufgabe der Erfindung, einen Kettenradsatz zu schaffen, der neben einer maximal möglichen Anzahl von Kettenübergangsbereichen auch eine Schalthilfe besitzt, die das Umlegen der Kette vom größeren auf das kleinere bzw. vom kleineren auf das größere Kettenrad unter Last bei hoher Schaltqualität erlaubt.

Die Lösung der Aufgabe ist im Anspruch 1 beschrieben.

Anhand von zwei Kettenrädern werden die Umlegemöglichkeiten für die Kette beschrieben. Es zeigen:
- Fig. 1: ein größeres und ein kleineres Kettenrad mit einer Kette, die vom kleineren auf das größere Kettenrad umgelegt wird;
- Fig. 2: die Kette in der Umlegelage vom größeren auf das kleinere Kettenrad;
- Fig. 3: die Kettenräder mit der Darstellung von drei Ketten in Umlegelage vom kleineren auf das größere Kettenrad als drei von elf Umlegemöglichkeiten;
- Fig. 4: vier von elf Umlegemöglichkeiten beim Schalten vom größeren auf das kleinere Kettenrad.

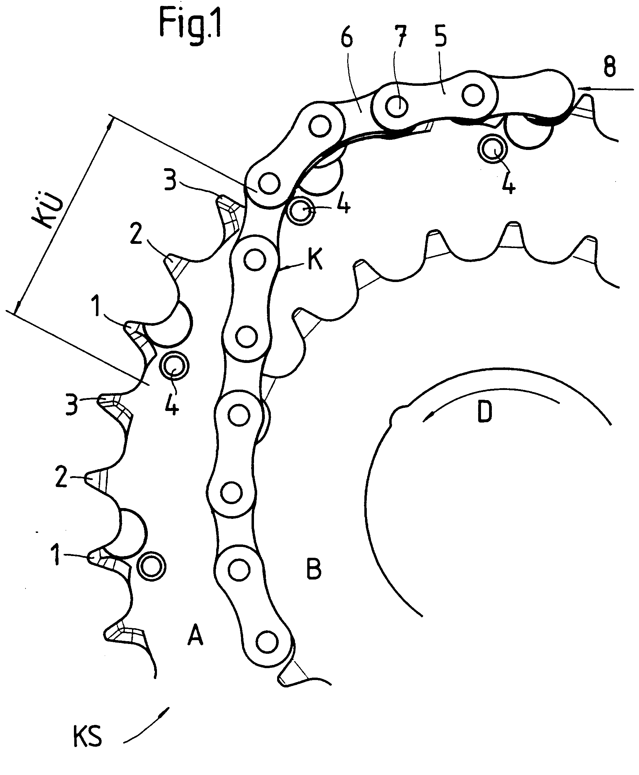

Die Fig. 1 zeigt ein Segment eines Kettenradsatzes KS mit einem größeren Kettenrad A und einem kleineren Kettenrad B. Das größere Kettenrad A weist eine Verzahnung mit Zähnen 1,2 und 3 auf, die verschieden geformt sind und sich in dieser Sequenz auf den gesamten Umfang des Kettenrades A erstrecken. Das kleinere Zahnrad B weist ebenfalls eine Verzahnung auf, deren Zähne keine Unterschiede zueinander aufweisen. Es ist ferner eine Kette K dargestellt, die aus Außenlaschen 5, Innenlaschen 6 und Gelenken 7 besteht und in einer Umlegelage dargestellt ist, die entsteht, wenn sie von einer Umlegeeinrichtung aus der Verzahnung des kleineren Kettenrades B in die Verzahnung des größeren Kettenrades A durch axiale Steuereinwirkung umgelegt wird. Die Kette K legt sich dadurch mit einer Stelle um ein Gelenk 7 auf einen Konusniet 4, der aus der Ebene des größeren Kettenrades A axial hervortritt und dadurch als Steighilfe dient, und läuft seitlich von hier aus in die Verzahnung des größeren Kettenrades A ein. Die Kette 8 muß man sich an der Stelle eines Ketteneinlaufbereiches 8 verlängert vorstellen, wo die Umlegeeinrichtung an der sich frei vom angetriebenen Kettenradsatz zum treibenden Kettenradsatz (KS) erstreckenden Kette K angreift, und axiale Verschiebungen der Kette bewirken kann.

Beim Umlegen vom kleineren Kettenrad B auf das größere Kettenrad A (kurz hochschalten) wird die Kette K also immer von einem der Konusnieten 4 gestützt, wobei es sich bei der Berührungsstelle an der Kette K immer um eine Stelle am Gelenk 7 mit sich überlappenden Außenlaschen 5 und Innenlaschen 6 handelt. Kommt am Zahn 2 eine Außenlasche 5 an, so wird diese gefangen und die Kette K läuft von hier ab in den Zahneingriff mit dem großen Kettenrad A. Die Kette K wird in der Höhe der Zähne 2 und 3 noch nicht voll in der Verzahnung des Kettenrades A liegen, sondern vielmehr einen kurzen Anstieg über den Teilkreis hinaus beschreiben. Es ergeben sich unter Last auch Verdrehungen der Kette K, die aber unschädlich sind und den nachfolgenden Zahneingriff der Kette K in die Verzahnung begünstigen. Kommt beim Hochschalten eine Innenlasche 6 am Zahn 2 an, so wird die Kette erst vom Zahn 3 über die Außenlasche 5 gefangen, und setzt von dort aus ihren Einlauf in die Verzahnung des größeren Kettenrades A unter Bildung einer leichten Überhöhung fort.

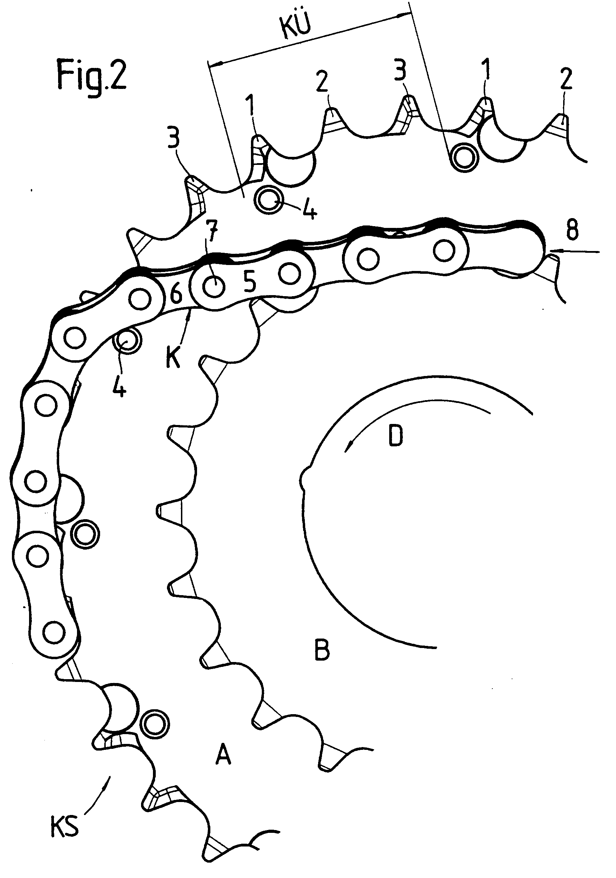

Gemäß Fig. 2 wird eine Kette K gezeigt, die sich in einer Umlegelage vom größeren Kettenrad A auf das kleinere Kettenrad B befindet (kurz niederschalten). Der Ketteneinlaufsbereich 8 befindet sich somit nach erfolgter Umlegung der Kette K auf dem kleineren Kettenrad B. Das Niederschalten wird durch die Kraft der Umlegeeinrichtung an der Kette K bewirkt, die an einer bevorzugten Stelle im Kettenübergangsbereich KÜ stattfinden muß. Bevorzugt ist die Stelle am Zahn 2, wenn eine Außenlasche 5 ankommt. Diese bewirkt, daß die Innenlasche 6 die Verzahnung des großen Kettenrades A am Zahn 3 verlassen kann, weil sich beide Innenlaschen 6 bereits außerhalb der Kettenradebene des größeren Kettenrades A befinden. Die folgende kettenradseitige Außenlasche 5 stützt sich auf dem Konus 4 ab, und läuft optimal in die Verzahnung des kleineren Kettenrades B ein. Kommt am Zahn 2 eine Innenlasche 6 an, so kann die Kette K das größere Kettenrad A noch nicht am Zahn 3 verlassen, da die Führung der Kette K durch die Innenlasche 6 dies nicht zuläßt. Erst einen Zahn später, also am Zahn 1 kann sich die Innenlasche 6 aus dem Zahneingriff lösen, was zur Folge hat, daß die Kette K sich nicht mehr an dem Konusniet 4 abstützten kann. Trotzdem liegen die Verzahnungsverhältnisse so, daß ein einwandfreies Einlaufen der Kette K in die Verzahnung des kleineren Kettenrades B beim Niederschalten möglich ist.

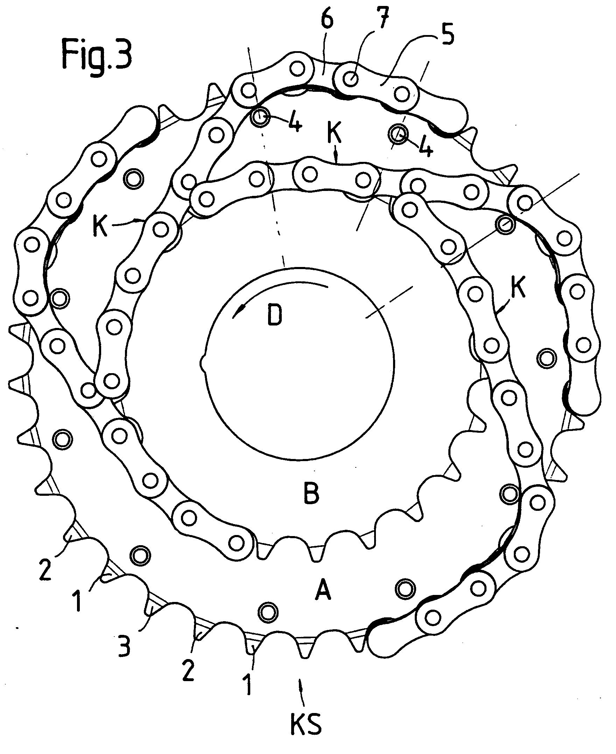

Die Fig. 3 zeigt vier von elf möglichen Umlegelagen der Kette K vom kleineren Kettenrad B auf das größere Kettenrad A, wobei ersichtlich ist, daß für die Bedingung des Kettenübergangsbereichs KÜ mit drei Zähnen 1,2 und 3 am größeren Kettenrad A ein solcher Kettenübergangsbereich KÜ mit einer ganzzahligen Zähnezahl, die kleiner als drei ist, verfügbar sein muß. Die Position der beiden Kettenräder A und B sowie die Position des Konusniets 4 muß auf den optimalen Einlauf der Kette K beim Hoch- und Niederschalten eingestellt sein. Ferner werden die Zähne 1,2 und 3 mit verschiedenartigen Schrägen versehen, die das Umlegen der Kette K beim Hoch- und Niederschalten begünstigen oder verhindern, kurz optimieren.

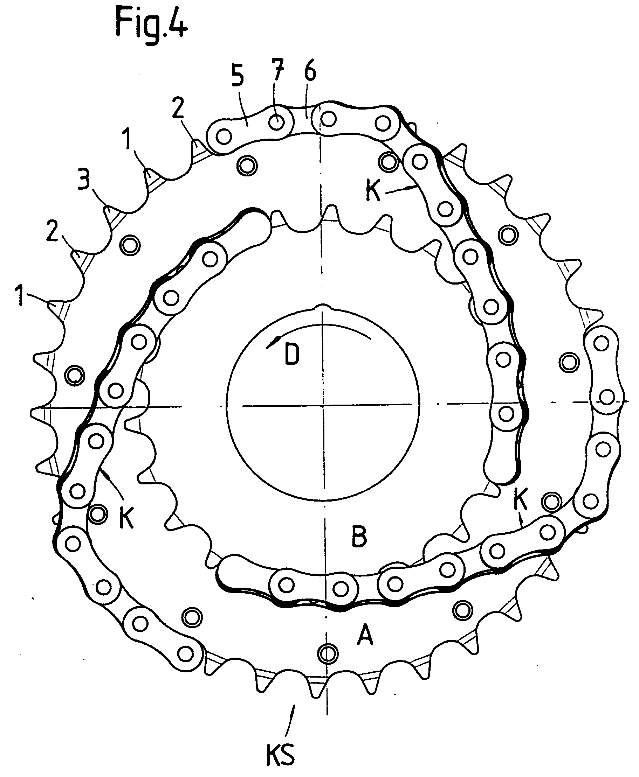

Die Fig. 4 zeigt die Kettenräder A und B gemäß Fig. 3 mit drei abgebildeten Ketten K in drei von elf möglichen Umlegelagen beim Niederschalten.

Die Zähnezahl des größeren Kettenrades A ist im Beispiel der Fig. 3 und 4 33 und die Zähnezahl des kleineren Kettenrades B 22. Der gemeinsame große Teiler ist somit elf, womit die Anzahl der Konusnieten 4 und somit die Anzahl der Umlegemöglichkeiten ebenfalls elf ist. Ein hierzu geeignetes drittes und größtes Kettenrad müßte, um das Prinzip fortzusetzen, 44 Zähne, ebenfalls elf Konusnieten 4 und einen Kettenübergangsbereich KÜ von vier Zähnen haben. Beispiele für weitere Dreifachkettenradsätze wären
20-30-40; Teiler: 10
24-36-48; Teiler: 12
33-44-55; Teiler: 11

Zweifach-Kettenradsätze können die folgenden Paarungen aufweisen:
40-50; Teiler: 10
44-55; Teiler: 11
36-48; Teiler: 12

## Patentansprüche

1. Kettenschaltung, insbesondere für Fahrräder, umfassend einen treibenden Kettenradsatz (KS) und einen angetriebenen Kettenradsatz sowie eine diese beiden Kettenradsätze miteinander verbindende Kette (K) mit Außenlaschen (5), Innenlaschen (6) und Gelenken (7), wobei der Kettenradsatz (KS) mindestens zwei verschieden große Kettenräder (A,B) aufweist, auf die die Kette (K,) durch eine Umlegeeinrichtung wechselweise umlegbar ist, wobei ferner das größere Kettenrad (A) als Steighilfe für die Kette (K) Konusnieten (4) aufweist,
dadurch gekennzeichnet,
daß die Zähnezahlen der Kettenräder (A,B...) einen größten gemeinsamen Teiler aufweisen, wodurch eine entprechende große Anzahl von möglichen Kettenübergangsbereichen (KÜ) erreicht wird, und daß beim größeren Kettenrad (A) eine Kettenübergangsbereich (KÜ) von mindestens drei Zähnen (1,2,3) am Umfang periodisch aufeinanderfolgend zwischen den als Steighilfen dienenden Konusnieten (4) angeordnet sind.

2. Kettenschaltung nach Anspruch 1,
dadurch gekennzeichnet,
daß der gemeinsame Teiler zwischen den Zähnezahlen der Kettenräder (A,B...) in einem Bereich zwischen 8 und 12 liegt.

3. Kettenschaltung nach Anspruch 1
dadurch gekennzeichnet,
daß die Konusnieten (4) gleichermaßen als Steighilfen beim Umlegen der Kette (K) vom kleineren Kettenrad (B) auf das größere Kettenrad (A) und als Kettenlenkeinrichtung beim Umlegen der Kette (K) vom größeren Kettenrad (A) auf das kleinere Kettenrad (B) dienen.

4. Kettenschaltung nach Anspruch 3,
dadurch gekennzeichnet,
daß die Zähne (1,2,3) des größeren Zahnrades (A) Schrägen aufweisen, die gewährleisten, daß die Kette (K) beim Umlegen vom größeren Kettenrad (A) auf das kleinere Kettenrad (B) erstmals am Zahn (2) in axialer Richtung aus dem Zahneingriff mit dem großen Kettenrad (A) mit der Innenlasche (6) herausdrückt und sich zwecks zielgenauem Einlaufen in die Verzahnung des kleineren Kettenrades (B) am Konusniet (4) als Kettenlenkeinrichtung abstützen kann.

## Claims

1. Gearshift mechanism, in particular for bicycles, comprising a set of driving sprocket wheels (KS) and a set of driven sprocket wheels, as well as a chain (K) connecting these two sets of sprocket wheels together and having outer link plates (5), inner link plates (6) and joints (7), the set of sprocket wheels (KS) having at least two sprocket wheels (A, B) of different sizes, onto which the chain (K,) can alternately be shifted by means of a shift device, the larger sprocket wheel (A) furthermore having conical rivets (4) which help the chain (K) to move upwards, characterized in that the numbers of teeth of the sprocket wheels (A, B ...) have a very large common devisor, resulting in a correspondingly large number of possible chain-transfer regions (KÜ) and in that a chain-transfer region (KÜ) of at least three teeth (1, 2, 3) is arranged successively at intervals on the circumference of the larger sprocket wheel (A), between the conical rivets (4) which help the chain to move upwards.

2. Gearshift mechanism according to Claim 1, characterized in that the common devisor of the numbers of teeth of the sprocket wheels (A, B ...) lies in a range between 8 and 12.

3. Gearshift mechanism according to Claim 1, characterized in that the conical rivets (4) serve equally as means for helping the chain to move upwards when shifting the chain (K) from the smaller sprocket wheel (B) onto the larger sprocket wheel (A) and as chain-guiding device when shifting the chain (K) from the larger sprocket wheel (A) onto the smaller sprocket wheel (B).

4. Gearshift mechanism according to Claim 3, characterized in that the teeth (1, 2, 3) of the larger sprocket wheel (A) have bevels which ensure that the chain (K), when shifting from the larger sprocket wheel (A) onto the smaller sprocket wheel (B), firstly comes out of meshing engagement with the large sprocket wheel (A) in the axial direction at the location of the inner link plate (6) at the tooth (2) and then, in order to run accurately into the toothing of the smaller sprocket wheel (B), can be supported on the conical rivet (4) as chain-guiding device.

## Revendications

1. Changement de vitesse à chaîne, en particulier pour bicyclettes, comprenant un jeu de roues dentées menant (KS) et un jeu de roues dentées mené ainsi qu'une chaîne (K) reliant l'un à l'autre ces deux jeux de roues dentées, avec des mailles extérieures (5), des mailles intérieures (6) et des articulations (7), le jeu de roues dentées (KS) présentant au moins deux roues dentées (A, B) de tailles différentes, sur lesquelles la chaîne (K) peut être changée au choix par un dispositif de changement de chaîne, la plus grande roue dentée (A) présentant en outre en tant qu'auxiliaire de passage en haut pour la chaîne (K) des rivets coniques (4),
caractérisé en ce que
les nombres de dents des roues dentées (A, B...) présentent un plus grand diviseur commun, un nombre comparativement grand de domaines de transition de chaîne possibles (KÜ) étant obtenu, et en ce que pour la plus grande roue dentée (A), un domaine de transition de chaîne (KÜ) d'au moins trois dents (1, 2, 3) sont disposées l'une derrière l'autre périodiquement sur la périphérie entre les rivets coniques (4) servant d'auxiliaires de passage en haut.

2. Changement de chaîne selon la revendication 1,
caractérisé en ce que
le diviseur commun entre les nombres de dents des roues dentées (A, B...) se trouve dans un domaine entre 8 et 12.

3. Changement de chaîne selon la revendication 1,
caractérisé en ce que
les rivets coniques (4) servent à la fois d'auxiliaires de passage en haut lors du changement de la chaîne (K) de la plus petite roue dentée (B) à la plus grande roue dentée (A) et de dispositif de guidage de chaîne lors du passage de la chaîne (K) de la plus grande roue dentée (A) à la plus petite roue dentée (B).

4. Changement de chaîne selon la revendication 3,
caractérisé en ce que
les dents (1, 2, 3) de la plus grande roue dentée (A) présentent des biseaux, qui garantissent que la chaîne (K), lors du passage de la plus grande roue dentée (A) à la plus petite roue dentée (B), presse tout d'abord avec la maille interne (6) sur la dent (2) dans la direction axiale pour sortir de l'engagement de la dent avec la grande roue dentée (A), et peut s'appuyer sur le rivet conique (4) sous forme de dispositif de guidage de chaîne dans le but de l'entrée ciblée dans la denture de la plus petite roue dentée (B).
